# EUROPEAN PATENT SPECIFICATION

(11) **EP 0 349 287 B1**
(45) Date of publication and mention of the grant of the patent: **20.12.1995**
(21) Application number: 89306549.0
(22) Date of filing: 27.06.1989
(51) Int. Cl.: G11B 5/706

(54) **Plate-like composite ferrite fine particles suitable for use in magnetic recording and process for producing the same**
Plättchenförmige feine Ferritteilchen, geeignet zur Verwendung bei magnetischer Aufzeichnung und Verfahren zur Herstellung derselben
Particules fines de ferrite sous forme de platelets capables pour l'usage dans l'enregistrement magnétique et son procédé de fabrication

(30) Priority: 28.06.1988 JP 161777/88; 10.05.1989 JP 119743/89
(43) Date of publication of application: 03.01.1990
(73) Proprietor: TODA KOGYO CORP., Hiroshima-shi Hiroshima-ken (JP)
(72) Inventor: Maekawa, Masaaki, Hiroshima-shi Hiroshima-ken (JP); Nagai, Norimichi, Hiroshima-shi Hiroshima-ken (JP); Sugita, Norio, Hiroshima-shi Hiroshima-ken (JP)
(74) Representative: Woods, Geoffrey Corlett

(56) References cited:
- EP-A- 0 145 229
- EP-A- 0 272 148
- DE-A- 3 529 756

## Description

The present invention relates to plate-like composite ferrite fine particles, and a process for producing such plate-like composite ferrite fine particles.

As described, for example, in JP-A-55-86103 (1980), ferromagnetic non-acicular particles have recently been demanded as a magnetic recording material, and in particular, as a perpendicular magnetic recording material.

Generally, plate-like ferrite Ba-containing particles are known as ferromagnetic non-acicular particles. Also, autoclaving an aqueous alkaline suspension containing Ba ions and Fe³⁺ using an autoclave as the reaction apparatus (hereinafter referred to as the "autoclaving method") is known as a process for producing plate-like ferrite.

Plate-like ferrite fine particles for magnetic recording are required to have as small a particle size as possible, to have an appropriate coercive force and a large magnetization as the magnetic properties, and to have excellent temperature dependence of the coercive force (temperature stability), such that the coercive force scarcely varies or has a tendency to lower with a rise in temperature. This will be explained in more detail later.

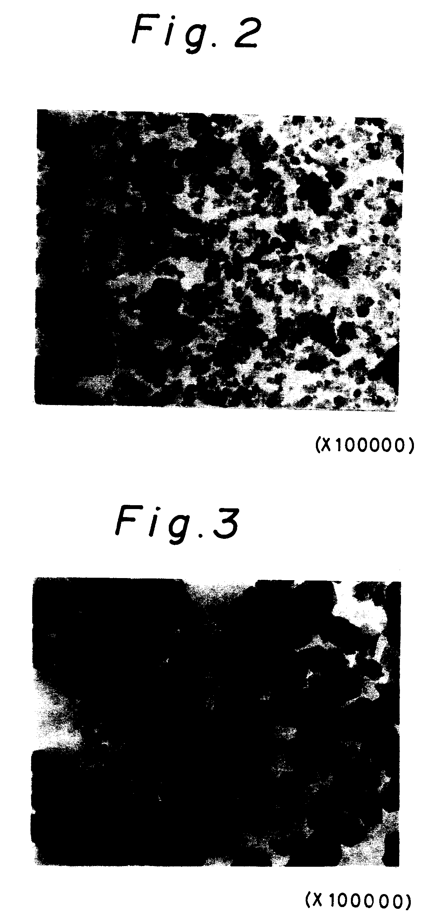

Firstly, the particle size of plate-like ferrite fine particles must be as small as possible, as seen from Fig. 3 on page 27, lines 23 to 29 in the REPORTS OF TECHNICAL RESEARCHES OF THE INSTITUTE OF ELECTRONICS AND COMMUNICATION ENGINEERS OF JAPAN MR 81-11. This figure shows the relationship between the particle size of Co-doped acicular maghemite particles and the noise level, and it is clear that as the particle size becomes smaller, the noise level decreases linearly.

This relationship also holds for plate-like ferrite Ba-containing particles.

Secondly, with respect to the magnetic properties, the plate-like ferrite Ba-containing fine particles are generally required to have a coercive force of about 2.39 x 10⁴ to 1.99 x 10⁵ Am⁻¹ (300 to 2,500 Oe). In order to reduce the coercive force of the plate-like ferrite Ba-containing particles produced in the autoclaving method to an appropriate coercive force, substituting part of the Fe³⁺ in the ferrite by Co²⁺, Ti⁴⁺ or the ions of a divalent metal M²⁺ such as Mn and Zn has been proposed.

The magnetization of plate-like ferrite Ba-containing particles must be as large as possible, as described in JP-A-56-149328 (1981), as follows "... the magneto plumbite ferrite which is used as a magnetic recording material is required to have the greatest possible saturation magnetization...".

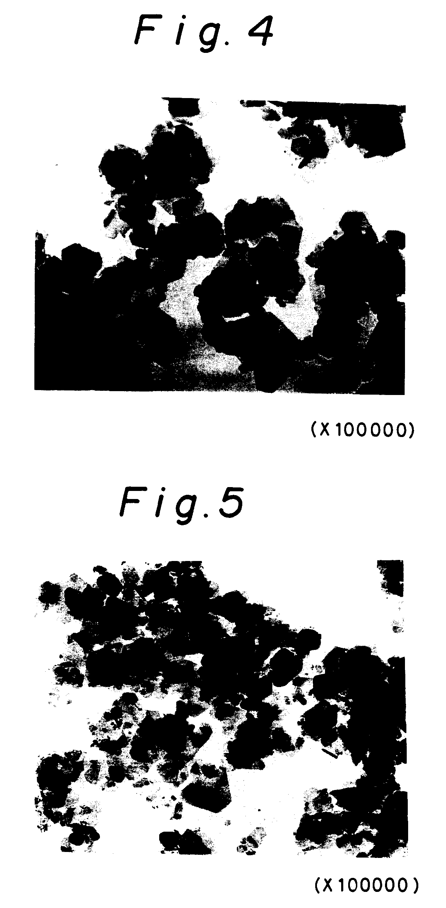

The coercive force of plate-like ferrite Ba-containing particles generally has a tendency to increase with rise in temperature, as seen from Fig. 4 on page 1123 of IEEE TRANSACTIONS ON MAGNETICS MAG-18 No. 6. At the time of recording and reproduction, the temperatures of the magnetic head and the magnetic medium are raised due to friction, so that the writing capacity for recording of the magnetic head is lowered, while the coercive force of the medium containing the plate-like ferrite Ba-containing particles as magnetic particles is increased with the rise in temperature, resulting in the drop of output or deterioration of the overwrite characteristic. It is therefore necessary, in order to enable record-writing in spite of the lowered writing capacity of the magnetic head, that the coercive force of the medium scarcely varies or has a tendency to lower with the rise in temperature. Namely, it is necessary that the coercive force of plate-like ferrite Ba-containing particles scarcely varies or has a tendency to lower with the rise in temperature. It is also pointed out, however, that the lowering of the coercive force more than necessary is unfavorable from the point of view of recording stability.

Plate-like ferrite Ba-containing particles are also required to have a large anisotropy field so as to enable high-density recording without lowering the output even in a high-frequency band.

This fact is described, for example, on pages 67 to 68 of HIGH-DENSITY MEMORY TECHNIQUE AND MATERIALS (1984), published by K. K. CMC, which states that "Figs. 2, 3 and 12 show the characteristics between the output and the wavelength obtained by recording/reproducing with a ring head by using a Co-Cr single-layer medium having a large perpendicular anisotropy field (Hk). An excellent high-density recording characteristic such as D₅₀ = 135 KBPI is obtained ....".

Plate-like ferrite fine particles which have as small a particle size as possible, a large magnetization, an appropriate coercive force and excellent temperature stability are now in the strongest demand. In the above-described autoclaving method, various types of ferrite particles precipitate depending on the selected reaction conditions. The precipitated particles ordinarily have the shape of a hexagonal plate, and the particle properties such as particle size distribution and average particle diameter, and the magnetic properties such as coercive force, magnetization and temperature stability are different depending upon the conditions under which the ferrite particles are produced.

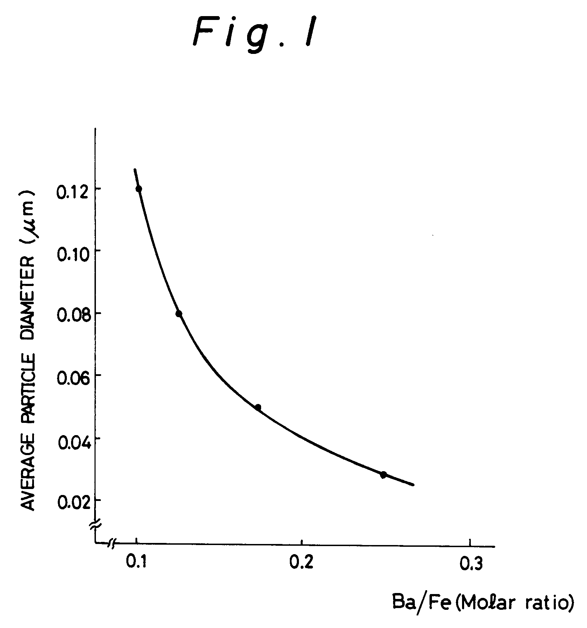

For example, in plate-like composite ferrite fine particles containing Co²⁺ and Ti⁴⁺ obtained by producing plate-like Ba ferrite fine particles containing Co²⁺ and Ti⁴⁺ by the autoclaving method while substituting a part of Fe³⁺ in the ferrite by Co²⁺ and Ti⁴⁺ in order to reduce the coercive force to an appropriate coercive force and heat-treating the thus-obtained fine particles, the coercive force reducing-effect of Co²⁺ and Ti⁴⁺ is large, so that the necessary amount of Co²⁺ and Ti⁴⁺ added to control appropriately the coercive force is so small as not to greatly lower the magnetization, which is maintained at a comparatively large value such as about 50 to 60 Am²/kg (50 to 60 emu/g). However, the temperature dependence of the coercive force is 199.2 Am⁻¹/°C to 478 Am⁻¹/°C (+2.5 Oe/°C to 6.0 Oe/°C), and the coercive force has a tendency to increase with the rise in temperature, as described above. This phenomenon is inferred from Fig. 1 on page 1459 of JOURNAL OF MAGNETISM AND MAGNETIC MATERIALS Nos. 15 to 18 (1980).

In the case of the plate-like composite ferrite fine particles containing Ni²⁺ and Ti⁴⁺ produced by the autoclaving method while substituting a part of Fe³⁺ in the ferrite by Ni²⁺ and Ti⁴⁺ in equimolar amounts in order to reduce the coercive force to an appropriate coercive force, the particle size is not less than 0.1 »m, and in the plate-like composite ferrite fine particles containing Ni²⁺ and Ti⁴⁺ in equimolar amounts obtained by heat-treating the thus obtained fine particles, the coercive force reducing-effect of Ni²⁺ and Ti⁴⁺ is so small that a large amount of Ni²⁺ and Ti⁴⁺ must be added for appropriate control of the coercive force, thereby reducing the magnetization to as low as about 47 Am²/kg (47 emu/g) at most. The temperature dependence of the coercive force is comparatively superior to that of the plate-like ferrite fine particles containing Co²⁺ and Ti⁴⁺, as inferred from Fig. 1 on page 1459 of JOURNAL OF MAGNETISM AND MAGNETIC MATERIALS Nos. 15 to 18 (1980), but the temperature dependence of the coercive force of about +79.67 to +239 Am⁻¹/°C (+1.0 to 3.0 Oe/°C) still cannot be said to be satisfactory.

As a method of improving the temperature stability of plate-like composite ferrite fine particles containing elements such as a Co²⁺ and Ti⁴⁺ to reduce the coercive force, methods disclosed in, for example, JP-A-61-152003 (1986) and 62-132732 (1987) are conventionally known.

The method disclosed in JP-A-61-152003 (1986) is heat-treating the plate-like composite ferrite fine particles containing elements such as Co²⁺ and Ti⁴⁺ to reduce the coercive force at a temperature of 300 to 700°C in a reducing atmosphere. This method is disadvantageous in that the coercive force after heat-treating is increased to more than double the value before heat-treating, thereby making appropriate control of the coercive force difficult.

The method disclosed in JP-A-62-132732 (1987) is making the particle shapes produced uniform such that the average particle diameter is not more than 1.0 »m, the thickness in the direction of the c-axis is not more than 0.2 »m and a plate ratio (average diameter of plate surfaces : thickness in the direction of the c-axis) is not less than 5:1. This method is disadvantageous in that the particle shape is regulated in order to improve the temperature stability.

As a method of enhancing the magnetization of plate-like composite ferrite Ba-containing particles, for example, methods of modifying the surfaces of the particles by spinel ferrite (disclosed in JP-A-60-255268 (1985), 60-255629 (1985), 62-139121 (1987), 62-139122 (1987), 62-139123 (1987) and 62-139124 (1987)) are known. By these methods, however, it is impossible to obtain well-balanced plate-like ferrite fine particles having an average particle diameter of less than 0.1 »m, a large magnetization, an appropriate coercive force and excellent temperature stability.

The establishment of a method of producing plate-like Ba ferrite fine particles having as small a particle size as possible, an appropriate coercive force, a large magnetization, and an excellent temperature stability without any regulation in the particle shape has therefore been strongly demanded.

As a result of various studies on a process for producing plate-like ferrite particles having as small a particle size as possible, an appropriate coercive force, a large magnetization, and an excellent temperature stability such that the coercive force scarcely varies with the rise in temperature without any regulation in the particle shape, it has been found that by autoclaving a suspension of an alkaline iron (III) hydroxide containing 0.125 to 0.25 Ba ions based on 1 atom of Fe³⁺ at a temperature of from 100 to 300°C, to which has been added in advance 3 to 5 atomic% of a Ti compound based on Fe³⁺ and a Ni compound in an amount such that 1 < Ni/Ti ≦ 4 by molar amount to produce the plate-like composite ferrite Ba-containing fine particles, suspending the thus obtained fine particles in an aqueous solution containing zinc, said solution having a pH of from 4.0 to 12.0, recovering, for example by filtering, the fine particles with a zinc hydroxide precipitated on the surfaces thereof, washing them with water, drying them and calcining (heat-treating) them at a temperature of from 600 to 900°C, the thus obtained plate-like composite ferrite Ba-containing particles have zinc in the vicinity of the particle surfaces in the form of a solid solution and also have an average particle diameter of not less than 0.01 »m and less than 0.1 »m. When these particles are provided with a surface coating of a spinel type oxide of formula M$\frac{\text{2+}}{\text{x}}$ Fe$\frac{\text{2+}}{\text{y}}$O.Fe₂O₃ wherein M²⁺, x and y are as hereinafter defined, the resulting coated particles have a coercive force which varies from -3.0 Oe/°C to +0.5 Oe/°C with a rise in temperature of from -20°C to 120°C. The present invention has been achieved on the basis of this finding.

The present invention provides plate-like composite ferrite line particles suitable for magnetic recording comprising plate-like composite ferrite Ba-containing Ba fine particles which comprise from 3 to 5 atomic% Ti based on Fe³⁺, Ni in the range of 1 < Ni/Ti ≦ 4 by molar amount and zinc in the vicinity of the particle surfaces in the form of a solid solution, which have an average diameter of not less than 0.01 »m and less than 0.1 »m, and the coercive force (Hc) of which scarcely varies in the temperature range of from -20°C to 120°C, and which are provided with a surface coating of a spinel type oxide of formula M²⁺ₓFe²⁺_{y}O.Fe₂O₃, wherein M²⁺ represents at least one metal selected from Co²⁺, Ni²⁺, Mn²⁺, Mg²⁺ and Zn²⁺, 0 ≦ x ≦ 1, 0 ≦ y ≦ 1, and 0 < x + y ≦ 1), the temperature dependence from -20°C to 120°C of the coercive force of the coated particles being from -239 Am⁻¹/°C to +39.83 Am⁻¹/°C (-3.0 Oe/°C to +0.5 Oe/°C).

The present invention also provides a process for producing particles as defined above comprising:
(i) autoclaving at a temperature of from 100 to 300°C a suspension of an alkaline iron (III) hydroxide containing 0.125 to 0.25 Ba ions per Fe³⁺ ion, 3 to 5 atomic % of a Ti compound based on Fe³⁺ and a Ni compound in an amount such that 1 < Ni/Ti ≦ 4 by molar amount to produce plate-like composite ferrite Ba-containing fine particles;
(ii) suspending the thus obtained fine particles in an aqueous solution containing zinc, said solution having a pH of 4.0 to 12.0;
(iii) recovering, e.g. by filtering, said particles with zinc hydroxide precipitated on the surfaces thereof;
(iv) washing said particles with water;
(v) drying said particles;
(vi) heat-treating said particles at a temperature of from 600 to 900°C;
(vii) mixing the heat-treated particles with an alkaline suspension containing an Fe²⁺ salt, at least one metal salt selected from Co²⁺, Ni²⁺, Mn²⁺, Mg²⁺ and Zn²⁺ or both said Fe²⁺ salt and said metal salt in an amount of from 1.0 to 35.0 atomic% based on the total amount of Fe³⁺, Ni and Ti in said particles, said suspension having a pH of from 8.0 to 14.0 ; and
(viii) heat-treating the resultant mixture at a temperature of from 50 to 100°C. Steps (vii) and (viii) coat the surfaces of the particles with a spinel type oxide of formula M²⁺ₓFe²⁺_{y}O.Fe₂O₃, wherein M²⁺ represents at least one metal selected from Co²⁺, Ni²⁺, Mn²⁺, Mg²⁺ and Zn²⁺, 0 ≦ x ≦ 1, 0 ≦ y ≦1 and 0 < x + y ≦ 1.

Fig. 1 shows the relationship between the ratio (molar ratio) of Ba added to Fe³⁺ and the particle size of the plate-like composite ferrite Ba-containing fine particles produced; and
Figs. 2 to 5 are electron micrographs (x 100,000) wherein
Figs. 2 to 4 are electron micrographs of the particle structures of the plate-like composite ferrite Ba-containing fine particles obtained in Comparative Examples 2, 3 and 15, respectively, and
Fig. 5 is an electron micrograph of the particle structure of the mixture of the plate-like composite ferrite Ba-containing fine particles and cubic BaTiO₃ particles obtained in Comparative Example 14.

Fig. 1 shows the relationship between the ratio (molar ratio) of Ba added to Fe³⁺ and the particle size (average particle diameter) of the plate-like composite ferrite Ba-containing fine particles produced by adding 3 atomic % Ti based on Fe³⁺ and Ni in a ratio of Ni/Ti = 3 (molar ratio) and carrying out a reaction under the conditions of Example 1 as described later. As is clear from Fig. 1, when the ratio of Ba added to Fe³⁺ is not less than 0.125, the plate-like composite ferrite Ba-containing fine particles produced have a particle size of less than 0.1 »m, and become finer as the ratio of Ba added to Fe³⁺ is increased.

Adding an Ni compound and a Ti compound when producing plate-like ferrite Ba-containing particles by an autoclaving method is conventionally known, as described in, for example, JP-A-56-149328 (1981).

This method, however, is aimed at reducing the coercive force by adjusting the valence of the Fe³⁺ ions and of an additive to be equal and hence it is necessary that the amounts of Ni compound and Ti compound added are equivalent. Therefore, this method is quite different in the technical means, object and advantages from the process of the present invention in which the particle size of the plate-like ferrite Ba-containing fine particles produced is controlled and in which the amount of Ni compound added is different from the amount of Ti compound added.

In the process of the present invention, it is possible to effectively increase the magnetization of the plate-like composite ferrite Ba-containing particles using a heat-treatment temperature of not higher than 900°C and to lower the coercive force by ensuring that zinc is in the vicinity of the particle surfaces in the form of a solid solution.

Accordingly, it is possible to effectively and appropriately control the coercive force while maintaining a large magnetization even if using an element having a small coercive force reducing-effect such as Ni²⁺ - Ti⁴⁺. The coercive force (Hc) of the particles provided with a surface coating of the spinel type oxide is preferably from 2.39 x 10⁴ to 1.99 x 10⁵ Am⁻¹ (300 to 2,500 Oe), more preferably from 3.98 x 10⁴ to 1.59 x 10⁵ Am⁻¹ (500 to 2,000 Oe), most preferably from 3.98 x 10⁴ to 1.19 x 10⁵ Am⁻¹ (500 to 1,500 Oe) and the magnetization (σ s) is preferably not less than 55 Am²/kg (55 emu/g) more preferably not less than 58 Am²/kg (58 emu/g), and the anisotropy field (Hk) is preferably not less than 2.86 x 10⁵ Am⁻¹ (3.6 KOe).

When plate-like composite ferrite Ba-containing Ba particles are coated with a spinel type oxide, the anisotropy field thereof is generally reduced. However, the plate-like composite ferrite Ba-containing particles having zinc in the vicinity of the particle surfaces in the form of a solid solution and containing Ni and Ti according to the present invention have a large anisotropy field. The reason for this is not clear, but the present inventors consider that it is due to the synergistic effect of using specific plate-like composite ferrite Ba-containing particles as the treated particles and coating the particles with a spinel type oxide.

Examples of the Fe³⁺ salt in the present invention are iron nitrate and iron chloride.

Examples of sources of the Ba ions in the present invention are barium hydroxide, barium chloride and barium nitrate.

The amount of Ba ions added is 0.125 to 0.25 ions per Fe³⁺ ion. If it is less than 0.125, the average particle diameter of the plate-like composite ferrite Ba-containing particles produced is not less than 0.1 »m. Even if it is more than 0.25 fine particles having a particle size of less than 0.1 »m are produced, but the magnetization of the particles obtained by heat treating the fine particles is so small that it is difficult to obtain magnetic particles for magnetic recording.

Examples of the Ti compound in the present invention are titanium tetrachloride, titanyl sulfate and titanium sulfide.

The amount of Ti compound added is 3 to 5 atomic% based on Fe³⁺. If it is less than 3 atomic%, it is difficult to control the coercive force of the plate-like composite ferrite Ba-containing particles obtained. If it exceeds 5 atomic%, the plate-like composite ferrite Ba-containing particles disadvantageously include BaTiO₃.

The reaction temperature in the present invention is 100 to 300°C. If the temperature is lower than 100°C, it is difficult to produce plate-like composite ferrite Ba-containing particles. On the other hand, if the temperature exceeds 300°C, the average particle diameter of the plate-like composite ferrite Ba-containing particles produced is not less than 0.1 »m.

Examples of the Ni compound in the present invention are nickel chloride, nickel nitrate and nickel acetate.

The amount of Ni compound added is in the range of 1 < Ni/Ti ≦ 4 by molar ratio.

If the Ni/Ti molar ratio is not more than 1, the average particle diameter of the plate-like composite ferrite Ba-containing particles produced is not less than 0.1 »m. Even if the Ni/Ti molar ratio is more than 4, plate-like composite ferrite Ba-containing particles having an appropriate coercive force which is an object of the present invention can be obtained but it is pointless to add more Ni compound more than necessary.

In order to precipitate a zinc hydroxide in the present invention, plate-like composite ferrite Ba-containing fine particles are suspended in an aqueous solution containing zinc and having a pH of from 4.0 to 12.0.

Examples of zinc compounds which can be included in the aqueous solution are zinc halides such as zinc chloride, zinc bromide and zinc iodide, zinc nitrate, zinc sulfate and zinc acetate.

If the pH is less than 4 or more than 12, precipitation of zinc becomes difficult.

The heat-treatment temperature in the present invention is 600 to 900°C.

If it is lower than 600°C, the amount of zinc solid solution on the particle surfaces of the plate-like composite ferrite Ba-containing particles is insufficient.

If it exceeds 900°C, sintering between the particles becomes prominent.

Prior to the heat-treatment in the present invention, the particle surfaces of the plate-like composite ferrite Ba-containing fine particles may be coated in advance with for example, an Si compound, Aℓ compound or P compound which has a sintering preventing effect.

A known flux may be used for heat-treatment. As the flux, at least one selected from an alkali metal halide, an alkali earth metal halide, an alkali metal sulfate and an alkali earth metal sulfate is usable.

The amount of flux used is 3 to 400 wt% based on the fine particles heat-treated. If it is less than 3 wt%, the particles are unfavorably sintered between each other during the heat-treatment. Addition of more than 400 wt% of a flux can also achieve the object of the present invention, but it is pointless to add more flux than necessary.

The flux is washed with at least one selected from water and an aqueous acid solution such as hydrochloric acid, acetic acid and nitric acid.

In the plate-like composite ferrite Ba-containing a particles having zinc in the vicinity of the surface in the form of a solid solution, the amount of Zn solid solution is 0.2 to 5.0 wt% calculated in terms of Zn.

If it is less than 0.2 wt%, the object of the present invention cannot be achieved sufficiently.

Even if it exceeds 5.0 wt%, the object of the present invention is achieved, but it is pointless to add more zinc than necessary.

Coating with a spinel type oxide in the present invention is carried out by mixing the plate-like composite ferrite Ba-containing particles with an alkaline suspension containing an Fe²⁺ salt, a metal M²⁺ salt other than Fe²⁺ or both the Fe²⁺ salt and the metal M²⁺ salt.

Examples of the Fe²⁺ salt are ferrous sulfate, ferrous chloride and ferrous nitrate.

As the metal M²⁺ salt, chlorides, nitrates and sulfates, for example, of at least one metal selected from Co²⁺, Ni²⁺, Mn²⁺, Mg²⁺ and Zn²⁺ are usable.

The amount of Fe²⁺ salt, metal M²⁺ salt or both Fe²⁺ metal and metal M²⁺ salt is 1.0 to 35.0 atomic% based on the total amount of Fe³⁺, Ni and Ti in the plate-like composite ferrite Ba-containing fine particles.

If it is less than 1.0 atomic%, the coating effect of the spinel type oxide is insufficient and it is difficult to obtain plate-like composite ferrite Ba-containing fine particles having both an enhanced magnetization and a large anisotropy field. If it exceeds 35.0 atomic%, the spinel type oxide is unfavorably separated out singly.

The mixing order of the plate-like composite ferrite Ba-containing fine particles and the alkaline suspension containing an Fe²⁺ salt, a metal M²⁺ salt or both the Fe²⁺ salt and the metal M²⁺ salt is not specified; either may be added to the other or both may be mixed with each other simultaneously.

The pH of the alkaline suspension is 8.0 to 14.0. If the pH is less than 8.0, the suspension is unsuitable for a hydroxide of Fe²⁺, metal M²⁺ or both Fe²⁺ and metal M²⁺ to exist in a stable state. Since a hydroxide of Fe²⁺, metal M²⁺ or both Fe²⁺ and metal M²⁺ exists in a stable state and a reaction for producing a spinel type oxide from such a hydroxide arises so long as the suspension is strongly alkaline, a pH of not more than 14.0 is sufficient for achieving the object of the present invention in consideration of industrial and economic efficiency.

The heating temperature in step (viii) in the present invention is 50 to 100°C. If it is lower than 50°C, it is difficult to produce the spinel type oxide from a hydroxide of Fe²⁺, metal M²⁺ or both Fe²⁺ and metal M²⁺. Although the spinel type oxide production reaction arises even at a temperature higher than 100°C, a temperature of 100°C is sufficient for achieving the object of the present invention because the reaction is carried out in an aqueous solution.

The plate-like composite ferrite Ba-containing fine particles according to the present invention have a particle size of less than 0.1 »m, a large magnetization and an appropriate coercive force, and the coercive force thereof scarcely varies with respect to temperature or has a tendency of lowering with a rise of temperature. Thus, the plate-like composite ferrite Ba-containing particles according to the present invention are highly suitable as plate like composite ferrite particles for magnetic recording which are now in the strongest demand.

Particularly, since the temperature dependence of the coercive force of these particles from to -20°C to 120°C is 2.39x10⁴ to 1.99x10⁵ Am⁻¹ (-3.0 Oe/°C to +0.5 Oe/°C), these particles are highly suitable as plate like composite ferrite particles for magnetic recording.

In addition, the plate-like composite ferrite Ba-containing fine particles according to the present invention have a particle size of less than 0.1 »m, a large magnetization, an appropriate coercive force and a large anisotropy field, and the temperature dependence of the coercive force thereof is 2.39x10⁴ to 1.99x10⁵ Am⁻¹ (-3.0 Oe/°C to +0.5 Oe/°C). Thus, the plate-like composite ferrite Ba-containing particles according to the present invention are highly suitable as plate like composite ferrite particles for magnetic recording which are now in the strongest demand.

Furthermore, in the plate-like composite ferrite Ba-containing fine particles of the present invention, the electric resistance has a tendency of lowering due to the spinel type oxide with which the particle surfaces are coated, so that a reduction in the amount of carbon and facilitation of dispersibility are for example expected in the production of a magnetic coating.

### Examples

The present invention is now further explained is the following Examples and Comparative Examples.

In the following Examples and Comparative Examples, the average particle diameter is a value obtained from an electron micrograph.

The magnetization and the coercive force were measured in a magnetic field of 10 KOe in the powder state.

The temperature stability (Oe/°C) was represented by the value obtained by dividing the difference between the coercive force at 120°C and the coercive force at -20°C by the temperature difference between 120°C and -20°C, namely 140°C.

An anisotropy field (Hk) is represented by the value obtained by the method described from line 21 on the left to line 10 on the right of page 3433 of JOURNAL OF APPLIED PHYSICS vol. 63, No. 8 (1988).

That is, coordinates (ordinate: Wr, abscissa: 1/H) were produced by plotting the value of energy loss (Wr) [Rotational Hysteresis Loss] obtained from the torque curve which is obtained when a sample is rotated by 360° using a torque magnetometer (Model 1600, produced by DIGITAL MEASUREMENT SYSTEM, INC.) with respect to the reciprocal: l/H of the magnetic field (H). The inclined portion of the curve which has the largest inclination to the abscissa was taken out and the value of the point at which the extension of the inclined portion crosses the abscissa:l/H was assumed to be the anisotropy field (Hk).

Each sample was produced by applying a kneaded mixture of plate-like composite ferrite Ba-containing particles and an epoxy resin to paper.

### Production of Plate-like Composite Ferrite Ba-Containing Fine Particles from Aqueous Solution

### Comparative Examples 1 to 15

### Comparative Example 1

An alkaline suspension of 14 mol of FeCℓ₃, 1.26 mol (equivalent to Ni/Ti = 3 by molar ratio) of NiCℓ₂, 0.42 mol (equivalent to 3 atomic% based on Fe³⁺) of TiCℓ₄, 2.33 mol (equivalent to 0.166 atomic% based on 1 atom of Fe³⁺) of BaCℓ₂ and 171 mol of NaOH was heated to 200°C in an autoclave and maintained at 200°C for 3 hours while being mechanically stirred, thereby producing a brown ferromagnetic precipitate.

After the autoclave was cooled to room temperature, the brown ferromagnetic precipitate was filtered out, throughly washed with water, and dried.

The thus obtained brown ferromagnetic particles turned out to be plate-like particles having an average particle diameter of 0.05 »m from observation through an electron microscope. Through X-ray fluorometry, it was found that the particles were composite ferrite Ba-containing particles containing 9.0 atomic% of Ni and 3.0 atomic% of Ti based on Fe³⁺.

### Comparative Examples 2 to 13 and 15

Plate-like composite ferrite containing Ba fine particles were obtained in the same way as in Comparative Example 1 except for varying the kind of an aqueous ferric salt solution, the kind and the amount of an aqueous Ba salt solution, the kind and the amount of Ni compound, the kind and the amount of Ti compound, and the reaction temperature and time.

The main production conditions and the properties of the products are shown in Table 1.

The electron micrographs (x 100,000) of the plate-like composite ferrite Ba-containing fine particles obtained in Comparative Examples 2, 3 and 15 are shown in Figs. 2 to 4, respectively.

### Comparative Example 14

Particles were produced in the same way as in Comparative Exmaple 1 except that the amount of TiCℓ₄ was 5.5 atomic% based on Fe³⁺.

The particles obtained were mixed particles of plate-like particles and cubic particles, as is clear from the electron micrograph (x 100,000) in Fig. 5, and a peak showing a magneto plumbite and a peak showing BaTiO₃ were observed in the X-ray diffraction pattern.

### Production of Plate-like Composite Ferrite Ba-Containing a Fine Particles by Heat Treating

### Comparative Examples 16 to 30

### Comparative Example 16

100 g of the plate-like composite ferrite Ba-containing particles containing Ni and Ti obtained in Comparative Example 1 were dispersed in 0.06 mol of an aqueous zinc chloride solution and a Zn hydroxide was precipitated on the particle surfaces at pH 9, which were filtered out, dried and then heat-treated at 850°C for 1.5 hours.

The thus obtained heat-treated particles are plate-like particles having an average particles diameter of 0.05 »m from observation through an electron microscope. As to the magnetic properties, the coercive force (Hc) was 1,050 Oe, the magnetization was 57.0 emu/g and the temperature dependence of the coercive force was +0.4 Oe/°C. Through X-ray fluorometry, it was found that the particles contained 9.0 atomic% of Ni, 3.0 atomic% of Ti based on Fe and 3.2 wt% of Zn.

When these fine particles are chemically analyzed, no zinc oxide or zinc hydroxide that was to be extracted under heating in an aqueous alkaline solution was detected. As a result, it was observed that zinc had dissolved in the form of a solid solution.

### Comparative Examples 17 to 30

Plate-like composite ferrite Ba-containing fine particles were obtained in the same way as in Comparative Example 16 except for varying the kind and the amount of Zn compound, the heat-treating temperature and time, and the kind and amount of flux, if any.

The main production conditions and the properties of the products are shown in Table 2.

### Example 1

100 g of the plate-like composite ferrite Ba-containing fine particles containing Ni and Ti and having zinc in the vicinity of the particles surfaces in the form of a solid solution which had been obtained in Comparative Example 16 and an alkaline suspension containing 0.37 mol of Fe(OH)₂ and 0.041 mol of Co(OH)₂ were mixed with each other (the total amount of Fe²⁺ and Co²⁺ was equivalent to 34.3 atomic% based on the total amount of Fe³⁺, Ni and Ti), and the total volume of the mixed suspension was adjusted to 2.0 ℓ by adding water. The resultant mixed suspension having a pH of 12.0 was then heated to 80°C and stirred at 80°C for 1.0 hour, thereby producing a black brown precipitate. The black brown precipitate was filtered out, washed with water, treated with acetone and dried at room temperature.

The black brown particles obtained had an average particle diameter of 0.05 »m according to observation through an electron microscope. In the X-ray diffraction pattern, a peak of Ba ferrite and a peak of spinel ferrite was observed.

As to the magnetic properties of the black brown particles, the coercive force (Hc) was 750 Oe, the magnetization (σs) was 65.2 emu/g, the temperature dependence of the coercive force was -1.0 Oe/°C and the anisotropy field (Hk) was 3.8 KOe.

### Example 2

100 g of the plate-like composite ferrite Ba-containing fine particles containing Ni and Ti and having zinc in the vicinity of the particle surfaces in the form of a solid solution which had been obtained in Comparative Example 18 and an alkaline suspension containing 0.11 mol of Fe(OH)₂ were mixed with each other (the amount of Fe²⁺ was equivalent to 9.2 atomic% based on the total amount of Fe³⁺, Ni and Ti), and the total volume of the mixed suspension was adjusted to 2.0 ℓ by adding water. The resultant mixed suspension having a pH of 12.5 was then heated to 90°C and stirred at 90°C for 1.0 hour, thereby producing a black brown precipitate. The black brown precipitate was filtered out, washed with water, treated with acetone and dried at room temperature.

The black brown particles obtained had an average particle diameter of 0.08 »m according to observation through an electron microscope. In the X-ray diffraction pattern, a peak of Ba ferrite and a peak of spinel ferrite was observed.

As to the magnetic properties of the black brown particles, the coercive force (Hc) was 960 Oe, the magnetization (σs) was 61.3 emu/g, the temperature dependence of the coercive force was -1.9 Oe/°C and the anisotropy field (Hk) was 3.7 KOe.

### Example 3

100 g of the plate-like composite ferrite Ba-containing fine particles containing Ni and Ti and having zinc in the vicinity of the particle surfaces in the form of a solid solution which had been obtained in Comparative Example 25 and an alkaline suspension containing 0.22 mol of Fe(OH)₂, 0.017 mol of Co(OH)₂ and 0.007 mol of Zn(OH)₂ were mixed with each other (the total amount of Fe²⁺, Co²⁺ and Zn²⁺ was equivalent to 20.3 atomic% based on the total amount of Fe³⁺, Ni and Ti), and the total volume of the mixed suspension was adjusted to 2.0 ℓ by adding water. The resultant mixed suspension having a pH of 12.0 was then heated to 90°C and stirred at 90°C for 1.0 hour, thereby producing a black brown precipitate. The black brown precipitate was filtered out, washed with water, treated with acetone and dried at room temperature.

The black brown particles obtained had an average particle diameter of 0.05 »m according to observation through an electron microscope. In the X-ray diffraction pattern, a peak of Ba ferrite and a peak of spinel ferrite was observed.

As to the magnetic properties of the black brown particles, the coercive force (Hc) was 690 Oe, the magnetization (σs) was 63.8 emu/g, the temperature dependence of the coercive force was -2.4 Oe/°C and the anisotropy field (Hk) was 3.9 KOe.

### Example 4

100 g of the plate-like composite ferrite Ba-containing fine particles containing Ni and Ti and having zinc in the vicinity of the particle surfaces in the form of a solid solution which had been obtained in Comparative Example 21 and an alkaline suspension containing 0.29 mol of Fe(OH)₂ and 0.072 mol of Mn(OH)₂ were mixed with each other (the total amount of Fe²⁺ and Mn²⁺ was equivalent to 30.2 atomic% based on the total amount of Fe³⁺, Ni and Ti), and the total volume of the mixed suspension was adjusted to 2.0 ℓ by adding water. The resultant mixed suspension having a pH of 11.5 was then heated to 85°C and stirred at 85°C for 1.5 hour, thereby producing a black brown precipitate. The black brown precipitate was filtered out, washed with water, treated with acetone and dried at room temperature.

The black brown particles obtained had an average particle diameter of 0.03 »m according to observation through an electron microscope. In the X-ray diffraction pattern, a peak of Ba ferrite and a peak of spinel ferrite was observed.

As to the magnetic properties of the black brown particles, the coercive force (Hc) was 610 Oe, the magnetization (σs) was 64.2 emu/g, the temperature dependence of the coercive force was -0.8 Oe/°C and the anisotropy field (Hk) was 3.7 KOe.

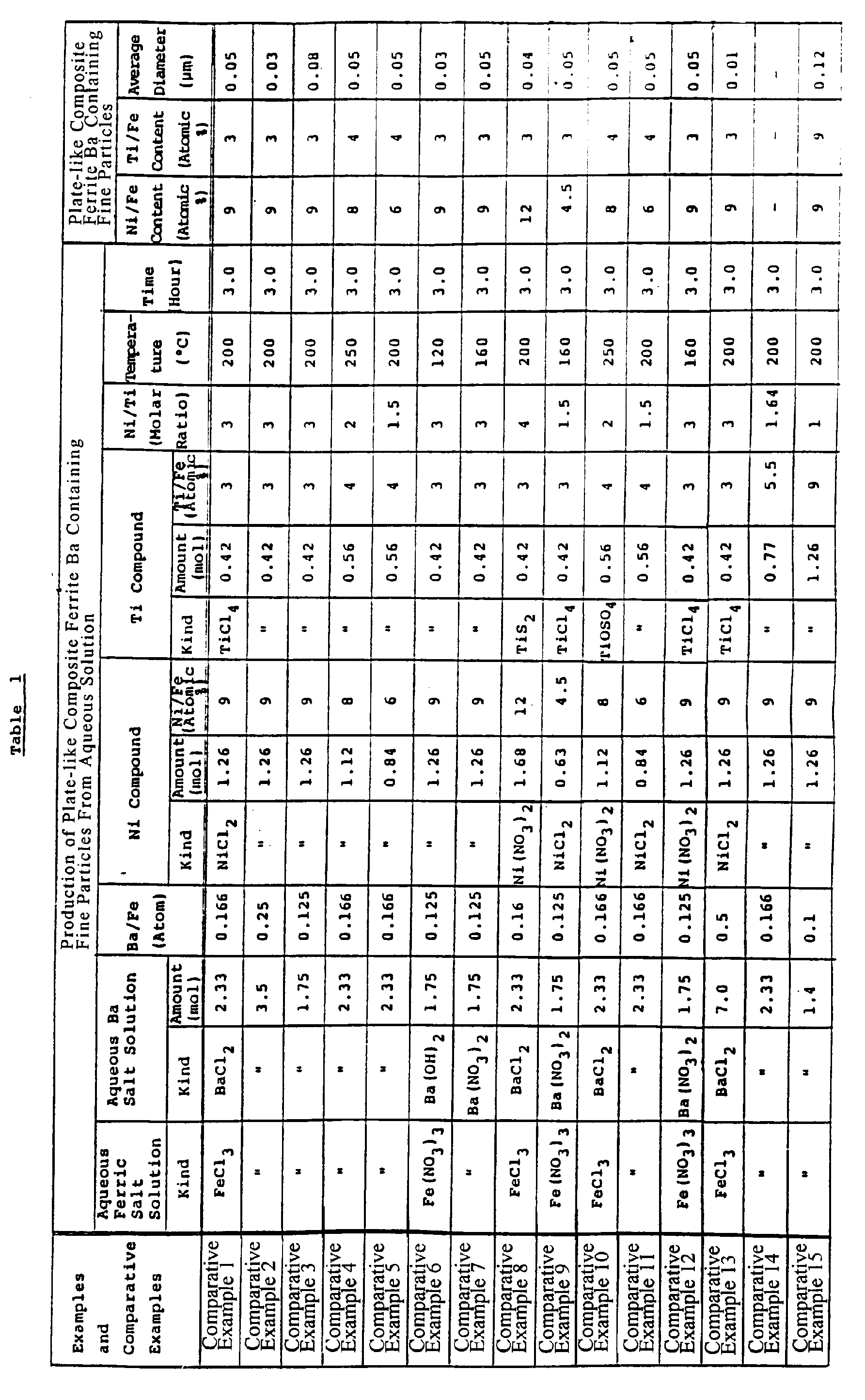

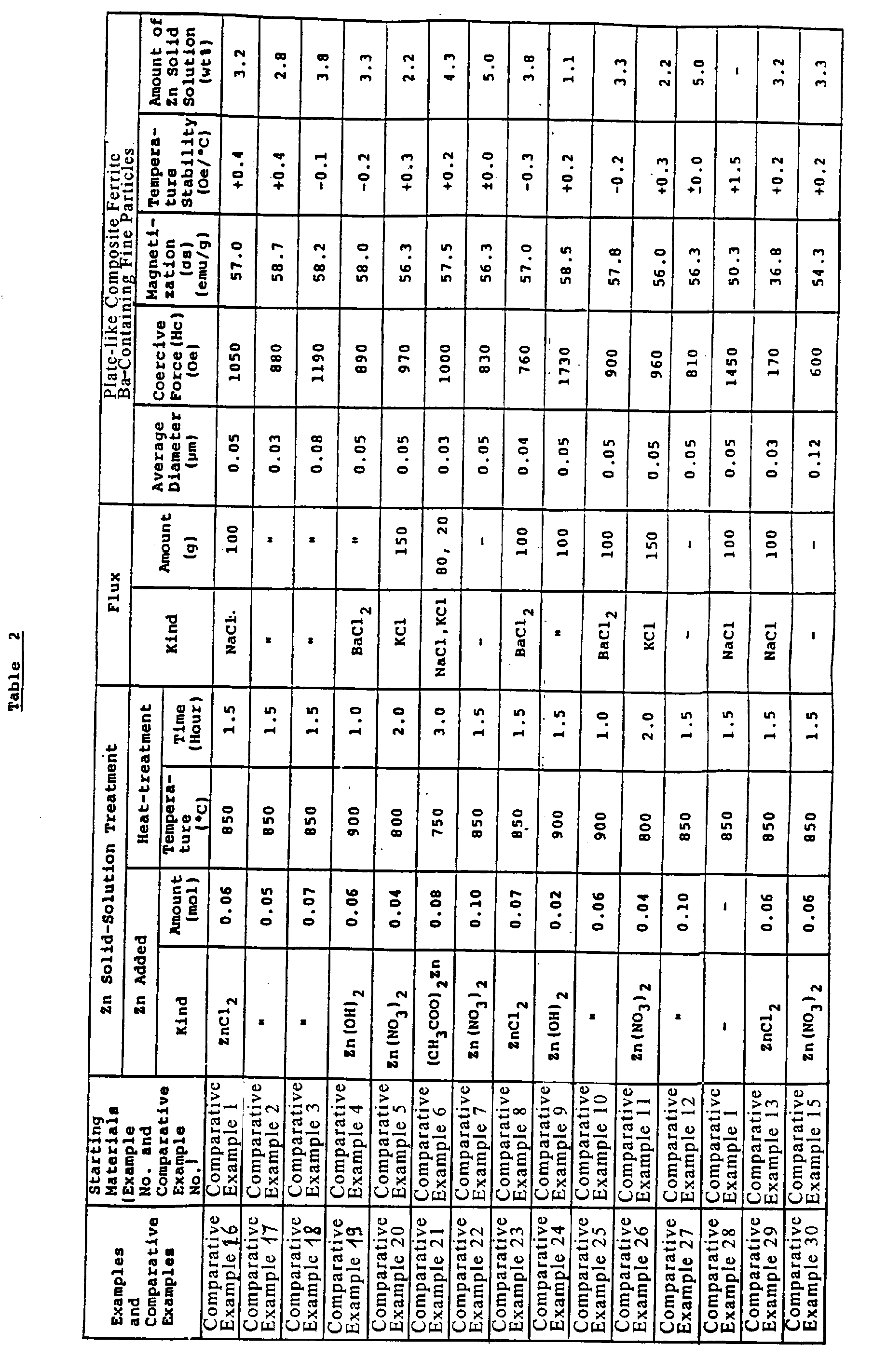

## Claims

1. Plate-like composite ferrite fine particles suitable for magnetic recording comprising plate-like composite ferrite Ba-containing fine particles which comprise from 3 to 5 atomic% Ti based on Fe³⁺, Ni in the range of 1 < Ni/Ti ≦ 4 by molar amount and zinc in the vicinity of the particle surfaces in the form of a solid solution, which have an average particle diameter of not less than 0.01 »m and less than 0.1 »m, the coercive force (Hc) of which scarcely varies in the temperature range of from -20°C to 120°C, and which are provided with a surface coating of a spinel type oxide of formula M²⁺ₓFe²⁺ _{y}0.Fe₂0₃, wherein M²⁺ represents at least one metal selected from Co²⁺, Ni²⁺, Mn²⁺, Mg²⁺ and Zn²⁺, 0 ≦ x ≦ 1, 0 ≦ y ≦ 1, and 0 < x + y ≦ 1, the temperature dependence from -20°C to 120°C of the coercive force of the coated particles being from -239 Am⁻¹/°C to +39.83 Am⁻¹/°C (-3.0 Oe/°C to +0.5 Oe/°C).

2. Particles according to claim 1, which have a coercive force of from 2.39 x 10⁴ to 1.99 x 10⁵ Am⁻¹ (300 to 2,500 Oe), a magnetization of not less than 55 Am²/kg (55 emu/g) and an anisotropy field (Hk) of not less than 2.86 x 10⁵ Am⁻¹ (3.6 KOe).

3. A process for producing particles as defined in claim 1 or 2 comprising:
(i) autoclaving at a temperature of from 100 to 300°C a suspension of an alkaline iron (III) hydroxide containing 0.125 to 0.25 Ba ions per Fe³⁺ ion, 3 to 5 atomic% of a Ti compound based on Fe³⁺ and a Ni compound in an amount such that 1 < Ni/Ti ≦ 4 by molar amount to produce plate-like composite ferrite Ba-containing fine particles;
(ii) suspending the thus obtained fine particles in an aqueous solution containing zinc, said solution having a pH of from 4.0 to 12.0;
(iii) recovering said particles with zinc hydroxide precipitated on the surfaces thereof;
(iv) washing said particles with water;
(v) drying said particles;
(vi) heat-treating said particles at a temperature of from 600 to 900°C;
(vii) mixing the heat-treated particles with an alkaline suspension containing an Fe²⁺ salt, at least one metal salt selected from Co²⁺, Ni²⁺, Mn²⁺, Mg²⁺ and Zn²⁺ or both said Fe²⁺ salt and said metal salt in an amount of from 1.0 to 35.0 atomic% based on the total amount of Fe³⁺, Ni and Ti in said particles, said suspension having a pH of from 8.0 to 14.0, and
(viii) heat-treating the resultant mixture at a temperature of from 50 to 100°C.

4. A magnetic recording medium in which the magnetic material comprises particles as defined in claim 1 or 2.

## Patentansprüche

1. Scheibenförmige, für magnetische Aufzeichnung geeignete, feine Ferrit-Verbundteilchen, die scheibenförmige, Ba enthaltende feine Ferrit-Verbundteilchen enthalten, die 3 bis 5 Atom-% Ti, bezogen auf Fe³⁺, Ni in einer molaren Menge im Bereich von 1 < Ni/Ti ≦ 4 und Zink in Form einer festen Lösung in Nachbarschaft zu den Teilchenoberflächen aufweisen, einen mittleren Teilchendurchmesser von nicht weniger als 0,01 »m und weniger als 0,1 »m besitzen,
deren Koerzitivkraft (Hc) sich im Temperaturbereich von -20°C bis 120°C kaum ändert,
die mit einer Oberflächenbeschichtung aus einem Oxid vom Spinell-Typ der Formel M²⁺ₓFe²⁺_{y} O.Fe₂O₃ versehen sind, worin M²⁺ mindestens ein unter Co²⁺, Ni²⁺, Mn²⁺, Mg²⁺ und Zn²⁺ ausgewähhltes Metall darstellt, 0 ≦ x ≦ 1, 0 ≦ y ≦ 1, und 0 < x+y ≦ 1 ist, und
worin die Temperaturabhängigkeit zwischen -20°C und 120°C der Koerzitivkraft der beschichteten Teilchen -239 AM⁻¹/°C bis + 39,83 AM⁻¹/°C (-3,0 Oe/°C bis + 0,5 Oe/°C) beträgt.

2. Teilchen gemäß Anspruch 1, die eine Koerzitivkraft von 2,39 x 10⁴ bis 1,99 x 10⁵ Am⁻¹ (300 bis 2500 Oe), eine Magnetisierung von nicht weniger als 55 Am²/kg (55 emu/g) und ein Anisotropiefeld (Hk) von nicht weniger als 2,86 x 10⁵ Am⁻¹ (3,6 KOe) besitzen.

3. Verfahren zur Herstellung von gemäß Anspruch 1 oder 2 definierten Teilchen, das umfaßt:
(i) Autoklavieren bei einer Temperatur von 100 bis 300 °C einer alkalischen Suspension eines Eisen(III)-hydroxids, das 0,125 bis 0,25 Ba-Ion pro Fe³⁺-Ion enthält, 3 bis 5 Atom-%, bezogen auf Fe³⁺, einer Ti-Verbindung und eine Ni-Verbindung in einer Menge von 1 < Ni/Ti ≦ 4 ausgedrückt als molare Menge, wobei scheibchenförmige, Ba-enthaltende feine Ferrit-Verbundteilchen hergestellt werden,
(ii) Suspendieren der so erhaltenen feinen Teilchen in einer Zink enthaltenden wäßrigen Lösung mit einem pH-Wert von 4,0 bis 12,0,
(iii) Wiedergewinnen der Teilchen mit auf der Oberfläche derselben niedergeschlagenem Zinkhydroxid,
(iv) Waschen der Teilchen mit Wasser,
(v) Trocknen der Teilchen,
(vi) Wärmebehandeln der Teilchen bei einer Temperatur von 600 bis 900°C,
(vii) Vermischen der wärmebehandelten Teilchen mit einer alkalischen Suspension, die ein Fe²⁺-Salz, mindestens ein unter Co²⁺, Ni²⁺, Mn²⁺, Mg²⁺ und Zn²⁺ ausgewähltes Metallsalz oder sowohl das Fe²⁺-Salz als auch das Metallsalz in einer Menge von 1,0 bis 35,0 Atom-%, bezogen auf die Gesamtmenge an Fe³⁺, Ni und Ti in den Teilchen, enthält, wobei die Suspension einen pH-Wert von 8,0 bis 14,0 besitzt, und
(viii) Wärmebehandeln des resultierenden Gemischs bei einer Temperatur von 50 bis 100°C.

4. Magnetisches Aufzeichnungsmedium, worin die magnetische Substanz gemäß Anspruch 1 oder Anspruch 2 definierte Teilchen enthält.

## Revendications

1. Particules de ferrite fines composites en forme de plaque, appropriées pour l'enregistrement magnétique, comprenant des particules de ferrite fines composites contenant Ba, en forme de plaque, qui comprennent de 3 à 5 % atomique de Ti sur la base de Fe³⁺, Ni dans la gamme de 1 < Ni/Ti ≦ 4 en quantité molaire, et du zinc dans le voisinage des surfaces des particules sous la forme d'une solution solide, qui ont un diamètre moyen de particules non inférieur à 0,01 »m et inférieur à 0,1 »m, leur force coercitive (Hc) ne variant pratiquement pas dans la gamme de température de -20 °C à 120 °C, et qui sont enrobées d'un revêtement de surface en oxyde de type spinelle de formule M²⁺ₓFe²⁺_{y}O.Fe₂O₃, où M²⁺ représente au moins un métal choisi parmi Co²⁺, Ni²⁺, Mn²⁺, Mg²⁺ et Zn²⁺, 0 ≦ x ≦ 1, 0 ≦ y ≦ 1 et 0 < x+y ≦1, l'effet de la température de -20 °C à 120 °C sur la force coercitive des particules revêtues étant de -239 Am⁻¹/°C à +39,83 Am⁻¹/°C (-3,0 Oe/°C à +0,5 Oe/°C).

2. Particules selon la revendication 1, qui ont une force coercitive de 2,39 x 10⁴ à 1,99 x 10⁵ Am⁻¹ (300 à 2 500 Oe), une magnétisation non inférieure à 55 Am²/kg (55 emu/g) et un champ d'anisotropie (Hk) non inférieur à 2,86 x 10⁵ Am⁻¹ (3,6 kOe).

3. Procédé pour fabriquer des particules telles que définies dans la revendication 1 ou 2, comprenant :
(i) le passage à l'autoclave d'une suspension d'un hydroxyde de fer (III) alcalin contenant 0,125 à 0,25 ion Ba par ion Fe³⁺ à une température de 100 à 300 °C, 3 à 5 % atomiques d'un composé de Ti sur la base de Fe³⁺, et un composé de Ni en une quantité telle que 1 < Ni/Ti ≦ 4 en quantité molaire, pour produire des particules de ferrite fines composites contenant Ba, en forme de plaque ;
(ii) la mise en suspension des particules fines ainsi obtenues dans une solution aqueuse contenant du zinc, ladite solution ayant un pH de 4,0 à 12,0 ;
(iii) la récupération desdites particules ayant de l'hydroxyde de zinc précipité sur leurs surfaces ;
(iv) le lavage desdites particules avec de l'eau ;
(v) le séchage desdites particules ;
(vi) le traitement à chaud desdites particules à une température de 600 à 900 °C ;
(vii) le mélange des particules traitées à chaud avec une suspension alcaline contenant un sel de Fe²⁺, un sel d'au moins un métal choisi parmi Co²⁺, Ni²⁺, Mn²⁺, Mg²⁺ et Zn²⁺, ou tant ledit sel de Fe²⁺ que ledit sel de métal, en une quantité de 1,0 à 35,0 % atomiques sur la base de la quantité totale de Fe³⁺, de Ni et de Ti dans lesdites particules, ladite suspension ayant un pH de 8,0 à 14,0, et
(viii) le traitement à chaud du mélange obtenu à une température de 50 à 100 °C.

4. Milieu d'enregistrement magnétique dans lequel la matière magnétique comprend des particules telles que définies dans la revendication 1 ou 2.
